Europäisches Patentamt

European Patent Office

Office européen des brevets

(19)

(11) Veröffentlichungsnummer: **0 036 944**
**B1**

(12) **EUROPÄISCHE PATENTSCHRIFT**

(45) Veröffentlichungstag der Patentschrift:
18.05.83

(51) Int. Cl.³: **F 28 F 25/08**

(21) Anmeldenummer: 81101270.7

(22) Anmeldetag: 21.02.81

(54) **Füllkörper.**

(30) Priorität: 02.04.80 DE 3012793

(43) Veröffentlichungstag der Anmeldung:
07.10.81 Patentblatt 81/40

(45) Bekanntmachung des Hinweises auf die Patenterteilung:
18.05.83 Patentblatt 83/20

(84) Benannte Vertragsstaaten:
**BE FR GB IT NL**

(56) Entgegenhaltungen:
**DE-A-2 032 293**
**DE-B-1 601 131**
**DE-B-2 234 013**
**DE-C-842 798**
**DE-C-866 350**
**DE-C-975 689**

(73) Patentinhaber: **Carl Munters-Euroform GmbH & Co. KG,
Süsterfeldstrasse 73, D-5100 Aachen (DE)**

(72) Erfinder: **Schultz, Martin, 58, Rue Frepert, B-4729 Hauset
(BE)**

(74) Vertreter: **Patentanwaltsbüro Cohausz & Florack,
Postfach 14 01 47, D-4000 Düsseldorf 1 (DE)**

ACTORUM AG

Füllkörper

Die Erfindung betrifft einen Füllkörper für den Wärme- und Stoffaustausch im Gegenstrom, insbesondere für die Wasserkühlung durch Luft in Kühltürmen, bestehend aus einer Mehrzahl unter Bildung paralleler Strömungskanäle aufeinandergelegter und miteinander verbundener gewellter oder gefalteter Folien.

Füllkörper dieser Art sind bekannt. Die Schichtung der Folien erfolgt entweder in der Weise, dass die Folien Wellenberg gegen Wellental aufeinandergelegt werden (DE-B-16 01 131) oder derart, dass die Wellungen oder Faltungen benachbarter Schichten einander kreuzen (DE-B-22 34 014), wobei in beiden Fällen die Folien an den Berührungsstellen miteinander verbunden, insbesondere geklebt oder geschweisst werden.

Beide genannten bekannten Füllkörper weisen Nachteile auf. Beim Schichten Wellenberg gegen Wellental verschieben sich die Folien vor dem Verkleben oder Verschweissen häufig gegeneinander und rutschen mit Wellental in Wellental bzw. Wellenberg in Wellenberg ineinander. Um dies zu verhindern, ist eine verhältnismässig umständliche Handhabung oder Einlegen in Formen erforderlich. Bei der anderen bekannten Füllkörperart mit sich kreuzenden Kanälen ergeben sich Schwierigkeiten bei der Reinigung zum Entfernen von Ablagerungen oder Verstopfungen. Füllkörper mit gerade durchgehenden Kanälen werden daher bevorzugt.

Aufgabe der vorliegenden Erfindung ist nun die Schaffung eines Füllkörpers, der ohne die geschilderte Gefahr des Ineinanderrutschens aufeinandergelegter Folien durch problemloses Schichten der Folien aufgebaut werden kann. Dabei soll die Form der Wellungen oder Faltungen bzw. der durch sie gebildeten Kanäle beliebig sein können.

Zur Lösung der gestellten Aufgabe wird erfindungsgemäss ein Füllkörper der eingangs genannten Art vorgeschlagen, der dadurch gekennzeichnet ist, dass die Folien in Querrichtung abwechselnd gewellte oder gefaltete und gleichbreite ebene Abschnitte aufweisen und so geschichtet sind, dass die gewellten oder gefalteten Abschnitte einer Folie auf den ebenen Abschnitten benachbarter Folien liegen. Die ebenen Abschnitte können durch abstandsweise angebrachte Rillen versteift sein.

Anhand des in der Zeichnung dargestellten Ausführungsbeispiels wird die Erfindung unter Angabe der durch sie erzielbaren Vorteile näher erläutert.

Fig. 1 zeigt ein Ausführungsbeispiel von Folien in transportfähiger Schichtung und

Fig. 2 einen Teilausschnitt eines durch Schichten und Verbinden von Folien hergestellten erfindungsgemässen Füllkörpers.

Die Folien 1 besitzen in Querrichtung gleichbreite gefaltete Abschnitte 2 und ebene Abschnitte 3. Der Abschnitt 2 weist im dargestellten Ausführungsbeispiel eine dachförmige Faltung auf, kann jedoch auch anders geformt sein, z.B. gewellt oder trapezförmig gefaltet.

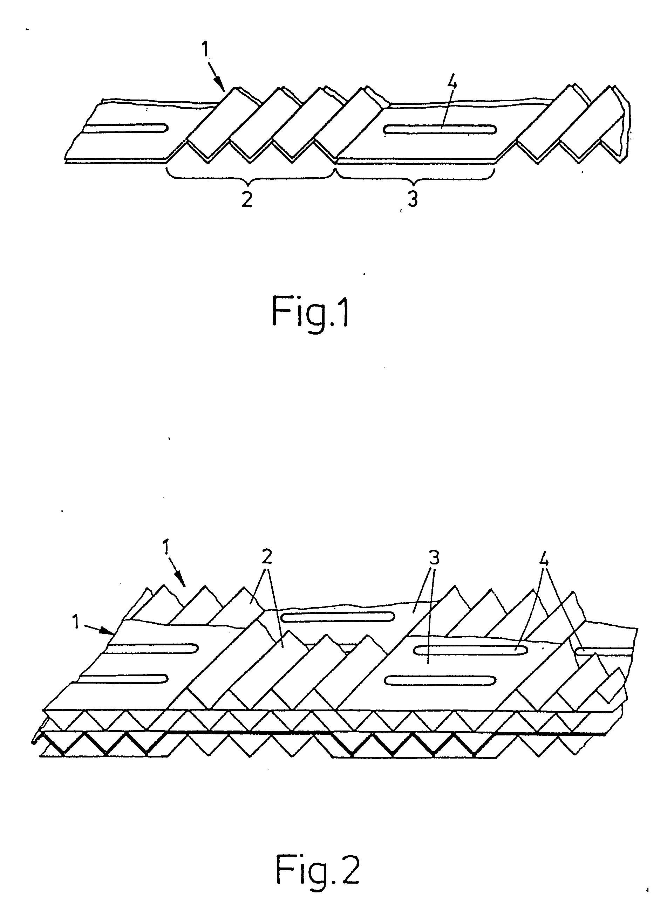

Zur Lagerung und zum Transport können die Folien 1 gemäss Fig. 1 raumsparend ineinander geschachtelt werden und liegen praktisch ohne Zwischenraum aufeinander, weil sie kongruent geformt sind. Zum Aufbau des Füllkörpers durch Schichten und Verbinden werden die Folien, wie Fig. 2 zeigt, jeweils um eine Teilung versetzt, so aufeinandergelegt, dass die gefalteten Abschnitte 2 einer Folie 1 auf den ebenen Abschnitten 3 der benachbarten Folie liegen. Um dies zeichnerisch besser hervorzuheben, ist in Fig. 2 eine mittlere Folie in stärkeren Linien eingezeichnet.

Infolge der erfindungsgemässen Ausbildung der den Füllkörper bildenden Folien mit gleichbreiten gewellten oder gefalteten Abschnitten 2 und ebenen Abschnitten 3 wird einmal eine gute Abstützung der gewellten oder gefalteten Abschnitte 2 auf den ebenen Abschnitten 3 jeweils benachbarter Folien erreicht und zum anderen ein seitliches Verrutschen beim Schichten der Folien 1 zum Aufbau des Füllkörpers verhindert.

Um die ebenen Abschnitte 3 zu versteifen, können abstandsweise Rillen 4 bzw. Rippen in Querrichtung vorgesehen sein.

**Patentansprüche**

1. Füllkörper für den Wärme- und Stoffaustausch im Gegenstrom, insbesondere für die Wasserkühlung durch Luft in Kühltürmen, bestehend aus einer Mehrzahl unter Bildung paralleler Strömungskanäle beliebigen Querschnitts aufeinandergelegter und miteinander verbundener gewellter oder gefalteter Folien, dadurch gekennzeichnet, dass die Folien (1) in Querrichtung abwechselnd gewellte oder gefaltete und gleich breite ebene Abschnitte (2) bzw. (3) aufweisen und so geschichtet sind, dass die gewellten oder gefalteten Abschnitte (2) einer Folie (1) auf den ebenen Abschnitten (3) benachbarter Folien (1) liegen.

2. Füllkörper nach Anspruch 1, dadurch gekennzeichnet, dass die ebenen Abschnitte (3) durch abstandsweise Rillen (4) versteift sind.

**Claims**

1. Filling substance for heat and material exchange in counterflow, in particular for water cooling by air in cooling towers, consisting of a plurality of corrugated or folded sheets which form parallel flow ducts of any cross section and which are laid on one another and connected to one another, characterized in that the sheets (1) in the transverse direction comprise flat alternately corrugated or folded sections (2) and (3) which are of equal width and layered such that the corrugated or folded sections (2) of a sheet (1) lie on the flat sections (3) of adjacent sheets (1).

2. Filling substance according to claim 1, characterized in that the flat sections (3) are reinforced by grooves (4) fitted at spacings.

## Revendications

1. Corps de remplissage pour l'échange thermique et le transfert de matière à contre-courant, en particulier pour le refroidissement d'eau par l'air dans des tours de réfrigération, constitué d'une pluralité de feuilles ondulées ou pliées disposées les unes sur les autres et reliées les unes aux autres en formant des canaux d'écoulement de section quelconque, caractérisé par le fait que les feuilles (1) présentent en direction transversale des sections planes (3) ou ondulées ou pliées (2) alternées de même largeur et sont superposées de telle manière que les sections ondulées ou pliées (2) d'une feuille (1) reposent sur les sections planes (3) de la feuille (1) adjacente.

2. Corps de remplissage selon la revendication 1, caractérisé par le fait que les sections planes (3) sont raidies par des rainures (4) espacées les unes des autres.

0 036 944

Fig.1

Fig.2

5